(19) Europäisches Patentamt
European Patent Office
Office européen des brevets

(11) **EP 3 599 482 B1**

(12) **EUROPEAN PATENT SPECIFICATION**

(45) Date of publication and mention
of the grant of the patent:
**06.09.2023 Bulletin 2023/36**

(21) Application number: **19185146.8**

(22) Date of filing: **09.07.2019**

(51) International Patent Classification (IPC):
***G01S 13/50*** *(2006.01)*     ***B60R 25/20*** *(2013.01)*

(52) Cooperative Patent Classification (CPC):
**B60R 25/102; B60R 25/30; G01S 13/50;
G01S 13/605; G01S 13/874; G01S 13/886**

(54) **METHODS AND APPARATUSES INVOLVING VEHICLE TOW-AWAY DETECTION**

VERFAHREN UND VORRICHTUNGEN MIT FAHRZEUGABSCHLEPPERKENNUNG

PROCÉDÉS ET APPAREILS IMPLIQUANT UNE DÉTECTION DE REMORQUAGE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.07.2018 US 201816044066**

(43) Date of publication of application:
**29.01.2020 Bulletin 2020/05**

(73) Proprietor: **NXP B.V.
5656 AG Eindhoven (NL)**

(72) Inventors:
• **Schat, Jan-Peter
Redhill, Surrey RH1 1QZ (GB)**
• **Doescher, Michael Johannes
Redhill, Surrey RH1 1QZ (GB)**
• **Zanati, Abdellatif
Redhill, Surrey RH1 1QZ (GB)**

(74) Representative: **Miles, John Richard
NXP SEMICONDUCTORS
Intellectual Property Group
Abbey House
25 Clarendon Road
Redhill, Surrey RH1 1QZ (GB)**

(56) References cited:
**EP-A2- 3 012 659      US-A- 5 929 753
US-A1- 2001 035 837    US-A1- 2013 033 381
US-A1- 2016 288 770**

## Description

## OVERVIEW

Aspects of various embodiments are directed to apparatuses and methods involving detection of tow-away of a vehicle.

Despite numerous security measures, vehicle theft is a large problem in many geographic regions. Damages caused by vehicle theft in countries can be in hundreds of millions of dollars per year, or more in many cases. Example security measures can include steering wheel locks or tilt sensors, Radio Navigation Systems, e.g., Global Positioning System (GPS), Global Navigation Satellite System (GLONASS), Beidou, Galileo, etc., tracking and messaging systems, and car alarms. Many of the security measures can be countered. For example, GPS systems can be counter-measured using GPS jammers.

These and other matters have presented challenges to efficiencies of vehicle theft implementations, for a variety of applications.

US5929753 (A) describes a real-time (instantaneous) vehicle anti-theft warning, notification and tracking system that eliminates false alarms by comparing a calculated displacement profile representing the characteristics of a measured displacement (or apparent displacement) of a vehicle with predetermined displacement profiles.

US2001035837 (A1) describes a system and method for highly selective intrusion detection using a sparse array of time modulated ultra wideband (TM-UWB) radars. Two or more TM-UWB radars are arranged in a sparse array around the perimeter of a building.

US2016288770 (A1) utilizes a remote sensing device to activate boundary alert sensors in a vehicle to reduce current loading during a key-off condition.

EP3012659 (A2) describes a system and methods for surveying areas using a radar system and an unmanned aerial vehicle (UAV).

## SUMMARY

A method includes generating a target map indicative of a plurality of objects around the vehicle using sensor data from sensor circuitry of the vehicle, the sensor circuitry including at least one radar sensor. The method further includes determining, by processing circuitry, if the vehicle is being towed away by comparing the target map to a previously obtained target map, determining if the vehicle is moving based on the comparison and, in response to determining if the vehicle is moving, outputting an alarm message indicative of the vehicle being towed away. The comparing further includes comparing a first set of coordinates (e.g., x and y coordinates) of the plurality of objects in the target map to a second set of coordinates of the plurality of objects in the previously obtained target map and determining that the vehicle is moving responsive to a threshold number of the plurality of objects exhibiting a change between the first set of coordinates and the second set of coordinates. The alarm message that is output can include an acoustic message, an email, a short message service (SMS) message, Radio Navigation System (e.g., Global Positioning System (GPS)) coordinates, and various combinations thereof. For example, the alarm message can be provided to a registered emergency contact, such as the owner of the vehicle and/or the police and can include GPS coordinates.

Generating the target map can include deriving a target position map indicative of relative positions of the objects around the vehicle and a target movement map indicative of movement of the objects while obtaining the sensor data. In some specific embodiments, the vehicle is determined to be moving responsive to determining movement in both the target position map and the target movement map. The movement can be determined by comparing the target map to a previous target map and/or using a hierarchical Hidden Markov Estimation (hHME) model for determining therefrom whether or not the vehicle is being towed away. More specifically, the vehicle can be determined to be moving in response to the comparison of the first and second set of coordinates and using the hHME model to estimate movement based on a set of likely scenarios and the sensor data. As a specific example, determining the vehicle is moving further includes comparing the coordinates of targets in the target map and in the previously obtained target map. In response to below or equal to a threshold number of targets exhibiting changes in the coordinates between the target map and the previously obtained target map, the processing circuitry determines the vehicle is not moving. In response to above or equal to another threshold number (or the threshold number) of targets exhibiting changes in the coordinates between the target map and the previously obtained target map, the processing circuitry determines the vehicle is moving.

In related embodiments, the processing circuitry is activated for detecting the occurrence of the tow-away in response to an indication of a vehicle alert condition, such as the vehicle being turned off and/or parked. As may be appreciated, if the vehicle is not on (e.g., is turned off), movement of the vehicle can be suspicious or otherwise indicative of a problem, such as occurrence of a tow-away of the vehicle. Once activated, the processing circuitry can activate the sensor circuitry. The sensor circuitry can include at least one radar sensor and, in some embodiments, a plurality of radar sensors arranged at different locations of the vehicle to provide coverage for a proximity of the vehicle. The processing circuitry can periodically activate the sensor circuitry for obtaining sensor data and for generating therefrom the target maps, and determining whether the vehicle is being towed away and periodically deactivating the sensor circuitry. In such embodiments, the method can include detecting if the vehicle is turned off, and in response, periodically activating the processing circuitry and/or sensor circuitry for detecting occurrence of the tow-away. In some specific embodiments, the alarm message can be terminated or otherwise removed in response to receiving an authorized passcode, such as from an owner of the vehicle or other legitimate user (e.g., a legitimate tow-away service to remove a parked vehicle, such as if the vehicle is blocking an emergency exit).

In various specific embodiments, another alarm message can be provided. For example, in response to determining or detecting that a radar sensor is covered sequentially after another radar sensor, and within a threshold period of time, another alarm message can be provided. The sequentially covering of radar sensors can be indicative of potential tampering with the vehicle, such as jamming of the radar system.

Other specific example embodiments are directed to an apparatus for detecting tow-away of a vehicle. The apparatus includes sensor circuitry and processing circuitry. The sensor circuitry has at least one radar sensor and obtains sensor data indicative of a plurality of objects near the vehicle. The processing circuitry generates a target map indicative of a position and movement of the plurality of objects around the vehicle using the sensor data and determines if the vehicle is being towed away. For example, the processing circuitry can determine if the vehicle is being towed away by comparing the target map to a previously obtained target map, determining if the vehicle is moving based on the comparison, in response to determining if the vehicle is moving, outputting an alarm message indicative of the vehicle being towed away. The processing circuitry is configured to compare a first set of coordinates of the plurality of objects in the target map to a second set of coordinates of the plurality of objects in the previously obtained target map and determine that the vehicle is moving responsive to a threshold number of the plurality of objects exhibiting a change between the first set of coordinates and the second set of coordinates.

The above discussion/summary is not intended to describe each embodiment or every implementation of the present disclosure. The figures and detailed description that follow also exemplify various embodiments.

**BRIEF DESCRIPTION OF FIGURES**

Various example embodiments may be more completely understood in consideration of the following detailed description in connection with the accompanying drawings, in which:

FIG. 1 illustrates an example of an apparatus, in accordance with the present disclosure;
FIG. 2 is an illustration of a vehicle having an apparatus, as implemented in a manner consistent with FIG. 1, in accordance with the present disclosure;
FIGs. 3A-3D illustrate an example implementation of a vehicle having an apparatus, and target maps obtained by the apparatus, in accordance with the present disclosure; and
FIG. 4 illustrates an example method of detecting two-away of a vehicle, in accordance with the present disclosure.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

**DETAILED DESCRIPTION**

Aspects of the present disclosure are believed to be applicable to a variety of different types of apparatuses, systems and methods involving detection of tow-away of a vehicle. In certain implementations, aspects of the present disclosure have been shown to be beneficial when used in the context of utilizing existing sensor circuitry, such as radar sensors, from a vehicle for detecting the tow-away. In some embodiments, using the existing radar system can allow for tow-away detection without adding additional hardware to the vehicle and by using a hierarchical Hidden Markov Estimation (hHME) model for interpreting the sensor data with a fault alert rate that is below a threshold. While not necessarily so limited, various aspects may be appreciated through the following discussion of non-limiting examples which use exemplary contexts.

Accordingly, in the following description various specific details are set forth to describe specific examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference numerals may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination.

Vehicle theft is a large problem in various regions of world and is estimated to cost hundreds of millions of dollars of damage a year. In many instances, theft systems are implemented on vehicles in an effort to mitigate vehicle theft, such as vehicle alarm systems or other anti-theft mechanisms. Many vehicle thefts are keyless thefts, which refers to or includes forcing the ignitions without the correct key and/or, for newer vehicles having vehicle alarm systems, towing the vehicle away to an off-site workshop where the vehicle alarm system can be disarmed or otherwise broken. Some example anti-theft mechanisms can include steering wheel locks, tilt systems, and Radio Navigation Systems, e.g., Global Navigation Satellite System (GLONASS), Beidou, Galileo, and Global Positioning System (GPS), that track locations and send signals to an owner or other authorized personal of the vehicle. However, many countermeasures can be taken to overcome the anti-theft mechanisms, such as using GPS jammers. Additionally, the anti-theft mechanisms can be costly and/or otherwise require additional changes to the vehicle. Embodiments in accordance with the present disclosure allow for detecting a vehicle tow-away by utilizing existing sensor systems in vehicles. The sensor system can include a radar system that is commonly used in vehicles.

Various embodiments include the use of a built-in radar system of a vehicle that may have been designed for providing other features and modifying the functionality of the radar system to make it fit for the special task of tow-away detection. The tow-away or other event is detected by observing the radar emissions of the vehicle while parked. As the vehicle is parked, movement of the vehicle can be indicative of a tow-away. Existing vehicle radar systems can be designed for various features, such as cruise control, crossing traffic detection, parking assistances, etc. The vehicle radar systems can consume large amounts of energy (e.g., Watts per system), which can make it difficult to use the vehicle radar systems for permanent supervision against vehicle theft. Additionally, as the sensor data is collected by the vehicle radar system for the designated features, detection of a tow-away of the vehicle requires different processing of the sensor data. And, as may be appreciated, many malicious counter measures, such as jamming or covering radar sensors, can be implemented. Embodiments in accordance with the present disclosure detect a tow-away of a vehicle using sensor data from a vehicle radar system by processing the sensor data using an hHME model. In a typical vehicle radar application (e.g., cruise control, pedestrian detection, blind spot supervision etc.), the evaluation algorithm detects single moving objects against the own vehicle movement. For detecting tow-away, in contrast, is interesting to know if the vehicle is moved passively with respect to a quasi-static background, e.g., if the entire background is moving or not. Differently to the typically radar application, the speed of the movement (e.g., a car being moved to a towing location) is very low. The evaluation algorithm, e.g., the hHME model, and the slope of the frequency modulation continuous wave (FMCW) ramp can be adapted, in accordance with various embodiments, to take an average of the speeds of all objects in the radar path.

In various related and more specific embodiments, the power consumption caused by use of the vehicle radar system can be reduced by one or more measures. For example, the energy consumption can be reduced by periodically activating the vehicle radar system when the vehicle is turned off, such as by a duty factor for the anti-theft measurement of 5-10 milliseconds (ms) on and 10-60 seconds off. Other reductions in energy consumption can be caused by reducing the supply voltage at the expense of the performance (e.g., transmitter power and signal-to-noise ratio (SNR) reduced), reducing output transmitter power, only on when the transmitter is powered on, reducing receiver performance, and/or limiting signal processing. Due to above-mentioned energy-saving measures, the SNR can be much lower than in the typical radar application. This can be taken into account by averaging over all objects, and also by time averaging over many FMCW chirps.

In specific embodiments, a method includes generating a target map indicative of objects around the vehicle using sensor data from sensor circuitry of the vehicle, the sensor circuitry including at least one radar sensor. The method further includes determining, by processing circuitry, if the vehicle is being towed away by comparing the target map to a previously obtained target map, determining if the vehicle is moving based on the comparison and, in response to determining if the vehicle is moving, outputting an alarm message indicative of the vehicle being towed away. The alarm message that is output can include an acoustic message, an email, a short message service (SMS) message, GPS or other Radio Navigation System coordinates, and various combinations thereof. For example, the alarm message can be provided to a registered emergency contact, such as the owner of the vehicle and/or the police and can include GPS coordinates, although embodiments are not so limited.

The processing circuitry can be activated for detecting the occurrence of the tow-away in response to an indication of a vehicle alert condition, such as the vehicle being turned off and/or parked. As may be appreciated, if the vehicle is not on (e.g., is turned off), movement of the vehicle can be suspicious or otherwise indicative of a problem, such as an occurrence of a tow-away of the vehicle. Once activated, the processing circuitry can activate the sensor circuitry. The sensor circuitry can include at least one radar sensor and, in some embodiments, a plurality of radar sensors arranged at different locations of the vehicle to provide coverage for a proximity of the vehicle. The processing circuitry can periodically activate the sensor circuitry for obtaining sensor data and for generating therefrom, the target maps, and determining whether the vehicle is being towed away, and can periodically deactivate the sensor circuitry. In such embodiments, the method can include detecting the vehicle is turned off, and in response, periodically activating the processing circuitry and/or sensor circuitry for detecting occurrence of the tow-away. In some specific embodiments, the alarm message can be terminated or otherwise removed in response to receiving an authorized passcode, such as from an owner of the vehicle.

Generating the target map can include deriving a target position map indicative of relative positions of the objects around the vehicle and a target movement map indicative of movement of the objects while obtaining the sensor data. In some specific embodiments, the vehicle is determined to be moving responsive to determining movement in both the target position map and the target movement map. The movement can be determined by comparing the target map to a previous target map and/or using a hierarchical Hidden Markov Estimation (hHME) model for determining therefrom whether or not the vehicle is being towed away. A first set of coordinates (e.g., x and y coordinates) of the objects in the target map is compared to a second set coordinates of the objects in the previously obtained target map and the vehicle is determined to be moving responsive to a threshold number of the objects exhibiting a change between the first set of coordinates and the second set of coordinates. More specifically, the vehicle can be determined to be moving in response to the comparison of the first and second set of coordinates and using the hHME model to estimate movement based on a set of likely scenarios and the sensor data.

The vehicle is determined to be moving by comparing the coordinates of objects in the target map and in the previously obtained target map. In response to below or equal to a threshold number of objects exhibiting changes in the coordinates between the target map and the previously obtained target map, the processing circuitry may determine the vehicle is not moving. In response to above or equal to a threshold number of objects exhibiting changes in the coordinates between the target map and the previously obtained target map, the processing circuitry determines the vehicle is moving.

In various specific embodiments, another alarm message can be provided. For example, in response to determining or detecting that a radar sensor is covered sequentially after another radar sensor, and within a threshold period of time, another alarm message can be provided. The sequentially covering of radar sensors can be indicative of potential tampering with the vehicle, such as jamming of the radar system.

Other specific embodiments are directed to an apparatus for detecting tow-away of a vehicle. The apparatus includes sensor circuitry and processing circuitry. The sensor circuitry has at least one radar sensor and obtains sensor data indicative of objects near the vehicle. The processing circuitry generates a target map indicative of a position and movement of objects around the vehicle using the sensor data and determines if the vehicle is being towed away. For example, the processing circuitry can determine if the vehicle is being towed away by comparing the target map to a previously obtained target map, determining if the vehicle is moving based on the comparison, in response to determining the vehicle is moving, outputting an alarm message indicative of the vehicle being towed away.

The processing circuitry can communicate with other circuitry of the vehicle and can activate in response to an indication of a vehicle alert condition. For example, the processing circuitry can be connected to an in-vehicle bus for providing the communication.

Other specific embodiments not part of the claims are directed to an apparatus for use with a vehicle having sensor circuitry including at least one radar sensor that obtains sensor data indicative of objects near the vehicle. The apparatus includes a vehicle data bus and processing circuitry. The vehicle data bus intercouples a plurality of circuits for communication with the vehicle. The vehicle data bus receives the sensor data from the sensor circuitry and the plurality of circuits include the processing circuitry. The processing circuitry generates a target map indicative of a position and movement of objects around the vehicle using the sensor data, determines if the vehicle is being towed away, and in response to determining the vehicle is being towed away, outputs an alarm message indicative of the vehicle being towed away, as previously described. In specific embodiments, the vehicle data bus and processing circuitry are part of an integrated circuit package configured and arranged to communicate with other circuitry of the vehicle (e.g., IC package/aftermarket).

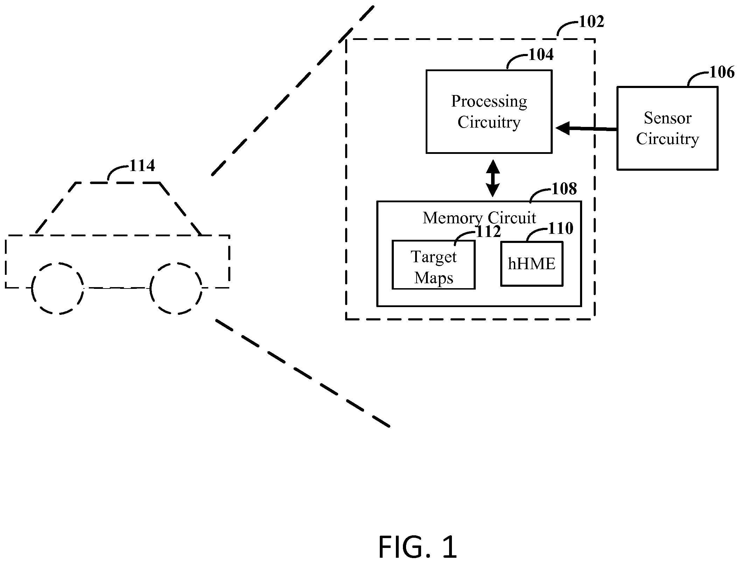

Turning now to the figures, FIG. 1 illustrates an example of an apparatus, in accordance with the present disclosure. The apparatus 102 can be used to detect a tow-away of a vehicle 114 utilizing existing sensor circuitry 106 of the vehicle 114. The sensor circuitry 106 can be existing in the vehicle 114, such as one or more radar sensors used for various purposes, such as cruise control, crossing traffic detection, blind-spot detection, and/or parking assistance. The apparatus 102 can interpret the different sensor data of such sensors using an hHME model. The sensor data can have various properties or features that are used to interpret the sensor data, which can include a forward-looking cruise control sensor having a longer range but poorer spatial resolution than the parking assistance radar sensor, which has only a few meters range but greater spatial resolution. As may be appreciated, an hHME model can include or refer to a statistical model of a system with unobserved or hidden states. In particular embodiments, the hHME model can include a statistical model of movement of objects and/or background around the vehicle 114 and likely scenarios indicated by the movement. The model can be used to estimate movement of the vehicle 114 based on the likely scenarios and the sensor data.

As shown, the apparatus 102 can be configured as part of a vehicle 114 and for detecting tow-away of the vehicle 114. The apparatus 102 includes processing circuitry 104 coupled with a memory circuit 108, and that is in communication and/or can further include the sensor circuitry 106. The processing circuitry 104 can obtain sensor data from the sensor circuitry 106. For example, the apparatus 102 can include a vehicle data bus intercoupling a plurality of circuits, including the processing circuitry 104, for communication with the vehicle 114. The vehicle data bus can receive the sensor data from the sensor circuitry 106 and provide the same to the processing circuitry 104. In a number of embodiments, the apparatus 102 including the processing circuitry 104 and the vehicle data bus are part of an integrated circuit (IC) package used to communicate with other circuitry of the vehicle 114, such as an aftermarket IC package. However, embodiments are not so limited and the apparatus 102 can be part of the vehicle 114 at production.

The sensor circuitry 106, as described above, includes at least one radar sensor used to obtain sensor data indicative of objects near the vehicle 114. In various embodiments, the sensor circuitry 106 can include a plurality of radar sensors that are arranged at different locations of the vehicle 114. The plurality of radar sensors can provide coverage for a proximity of the vehicle 114, such as providing 360 degree coverage.

The apparatus 102 can be used to detect tow-away of the vehicle 114 by generating a target map indicative of objects around the vehicle 114 using the sensor data from the sensor circuitry 106. For example, the processing circuitry 104 can generate the target map that is indicating of a position and movement of the objects around the vehicle 114. In specific embodiments, generating the map can include deriving a target position map indicative of relative positions of the objects around the vehicle 114 and a target movement map indicative of movement of the objects (while obtaining the sensor data). The target map can be stored on a memory circuit 108 of the apparatus 102, as shown by the stored target maps 112.

The processing circuitry 104 can determine if the vehicle 114 is being towed away by comparing the target map to a previously obtained target map (as stored in the memory circuit 108), and determining if the vehicle 114 is moving based on the comparison. In various embodiments, an hHME model 110 is used for determining whether or not the vehicle 114 is being towed. The target position map can provide indications of locations of the objects, such as x and y coordinates of each object near the vehicle 114. The target movement map can include an indication of movement of each of the objects using sensor data obtain during the particular scan by the sensor circuitry 106 (e.g., detection of movement, and optionally, direction of movement and/or speed, of objects using radar sensors and other calculations, such as Doppler-based calculations). One or more of the target position map and the target movement map can be compared to a previously obtained version to determine if the vehicle 114 is likely moving using the hHME model 110. In some specific embodiments, in response to determining the vehicle is likely moving based on both maps and the comparison to prior maps, the processing circuitry 104 determines the vehicle is being towed away.

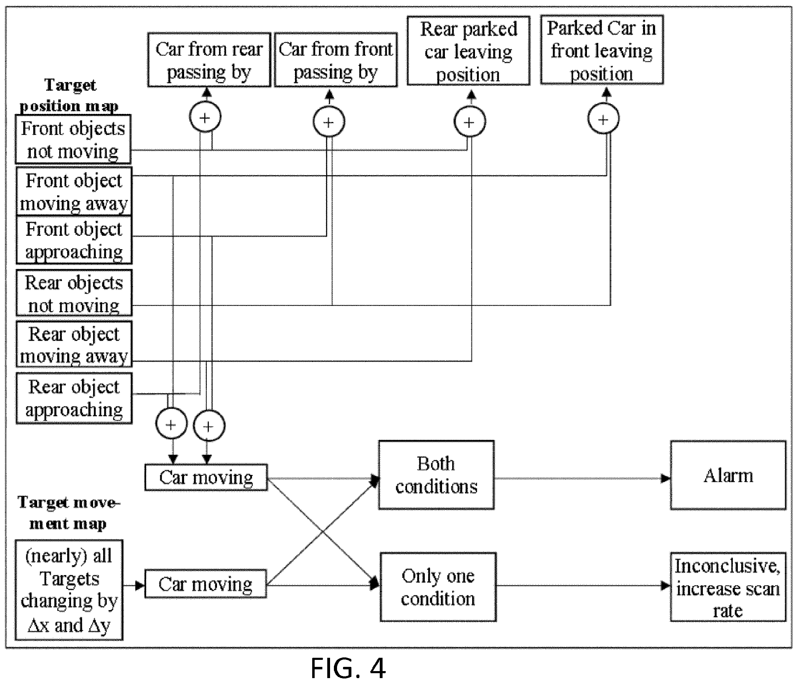

In a number of embodiments, the target map is generated periodically, such as every thirty seconds. The comparison can include comparing a first set of coordinates, e.g., x and y coordinates, of each object in the target map to a second set of coordinates of the objects in the previously obtained target map. In response to a threshold number of object exhibiting changes between the first and second sets of coordinates, the processing circuitry 104 determines the vehicle 114 is moving. The hHME model 110 is used to estimate the movement based on a set of likely scenarios and the sensor data, and in response to the comparison of the first and second sets of coordinates. Example likely scenarios are further illustrated and described herein in connection with FIG. 4. In some embodiments, in response to below or equal to a threshold number of objects in the target map exhibiting changes between the sets of coordinates, the processing circuitry 104 can determine the vehicle 114 is not moving.

In various embodiments, in response to determining the vehicle 114 is moving, the processing circuitry 104 outputs an alarm message indicative of the vehicle 114 being towed away. The alarm message can include a SMS message, an email, an acoustic message, and/or Radio Navigation System coordinates, such as GPS coordinates, of the current location/locations of the vehicle 114. The alarm message can be provided to a registered emergency contact of the vehicle 114 and/or local police based on the GPS or other Radio Navigation System coordinates. The registered emergency contact can include the police, the owner of the vehicle, and/or another registered contact as authorized by the owner of the vehicle (e.g., ON Star or other vehicle services). The alarm message, in specific embodiments, can be terminated in response to receiving an authorized passcode, such as from the owner of the vehicle.

As previously described, vehicle radar systems can consume threshold amounts of energy. The energy consumption during tow-away detection can be reduced by periodically activating the vehicle radar system when the vehicle is turned off, such as by a duty factor for the anti-theft measure of 5-10 ms on and 10-60 seconds off. Other reductions in energy consumption can be caused by reducing the supply voltage at the expense of the performance (e.g., transmitter power and SNR reduced), reducing output transmitter power, only on when the transmitter is powered on, reducing receiver performance, and limiting signal processing. The follow is a non-limiting example calculation showing that standard car batteries can supply the theft protection system for a sufficiently long time. Example assumptions for the calculation can include, but are not limited to:

On time: $T_{on}$=5 ms;
Off time: $T_{off}$= 60 s;
Power consumption: P=10 W (radar sensors + CPU);
Battery capacity: 40 Ah, 12 V A E=480 Wh; and
Allowable use of battery capacity: Cap_used=5%.

Using the above-provided example assumptions can result in a total time T for running the alert system from the car battery:

$$T = T_{off}/T_{on} * E/P * Cap\_used$$
$$= 5 \text{ ms} / 60\text{s} * 480\text{Wh} / 10 \text{ W} * 5\%$$
$$= \underline{28800\text{h} \approx 3.2 \text{ yr}}.$$

Thus, even though vehicle radar systems at first sight seem to be not suitable for anti-theft use, in a scenario with a sufficient high ratio $T_{off}/T_{on}$ they can protect a vehicle for many years on a vehicle battery.

As described above, various features can be implemented to reduce the power consumption caused by using the radar sensors for vehicle tow-away. More specifically, the processing circuitry 104 can be activated for detecting tow-away occurrences in response to an indication of a vehicle alert conditions, such as the vehicle parking and/or being turned off. Responsive to the activation, the sensor circuitry 106 can be periodically activated and deactivated for generating target maps and determining whether the vehicle 114 is being towed away, such as the above-described on and off times for the tow-away detection. As may be appreciated, vehicle turn-off can be detected, and in response, the processing circuitry 104 and/or sensor circuitry 106 is periodically activated for detecting the occurrence of a tow-away (e.g., obtain sensor data, generate a target map, and compare to a previous target map).

Various embodiments can provide further protections against counter-measure techniques, such as jamming or covering of radar sensors. For example, the signals of several radar sensors can be taken into account (as only the movement with respect to the background is interesting, any sensor can deliver a suitable signal, as opposed to the normal car radar applications), plausibility checks of the received signal can be performed, and another alarm message can be provided if covering of a radar sensor is detected. For example, the other alarm message can be provided in response to detecting a radar sensor is covered sequentially after another radar sensor and within a threshold period of time.

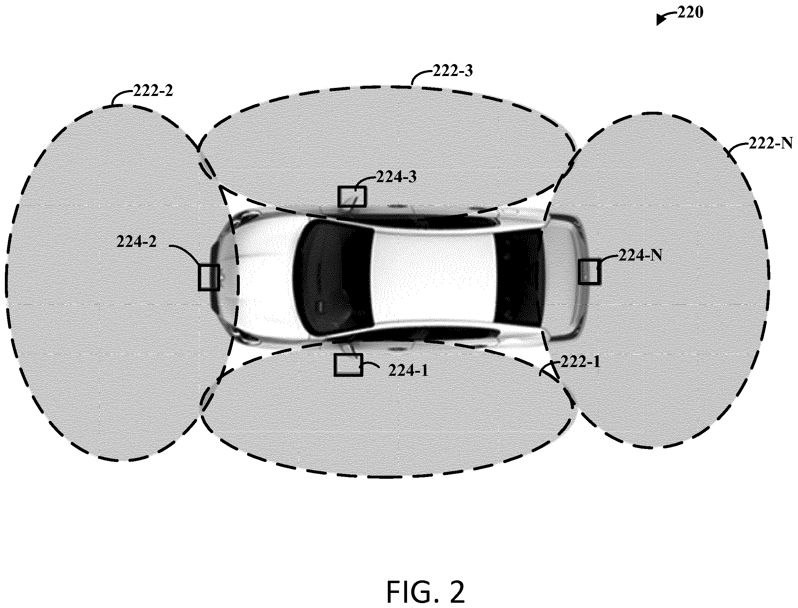

FIG. 2 is an illustration of a vehicle having an apparatus, as implemented in a manner consistent with FIG. 1, in accordance with the present disclosure. The vehicle 220 has a radar system having a plurality of radar sensors 224-1, 224-2, 224-3...224-N (herein referred to generally as "the radar sensors 224" for ease of reference). Each of the radar sensors 224 can have a range 222-1, 222-2, 222-3...222-N (herein referred to generally as the "ranges 222"), where the ranges 222 are typical of ultra-short range radar sensors. The ranges 222 cover the proximity of the vehicle 220. Specifically, the ranges 222 can be sufficient to detect many objects in the background, which can be useful for determining if the vehicle 220 is moving. The ranges 222, however, may not cover far-away objects which do not provide additional contribution to determine whether or not the vehicle is moving.

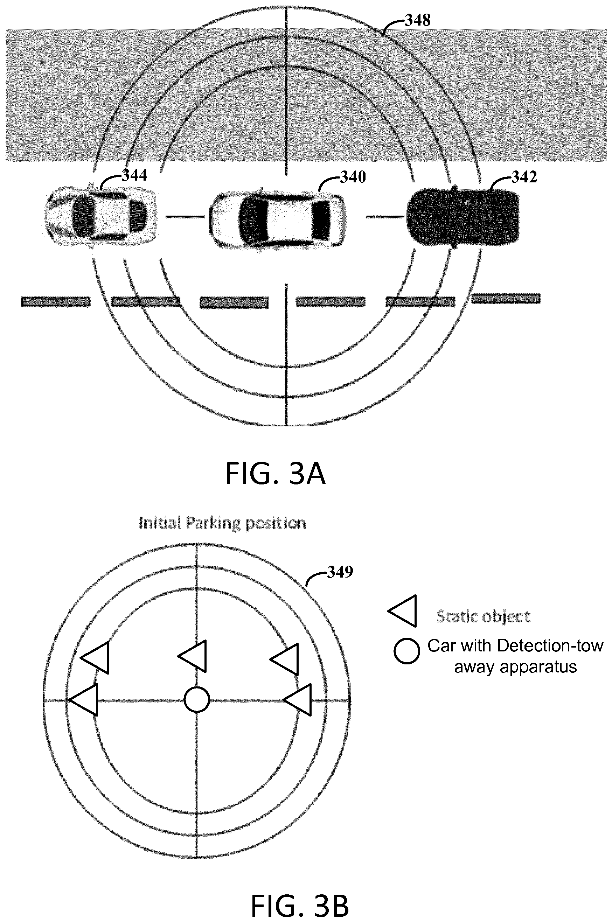

FIGs. 3A-3D illustrate an example implementation of a vehicle having an apparatus, and target maps obtained by the apparatus, in accordance with the present disclosure. FIG. 3A, more specifically, shows a specific example of a parked vehicle 340 having the apparatus described in connection with FIG. 1, and example objects around the vehicle 340. In the specific example, a first vehicle 344 is in front of the parked vehicle 340 and a second vehicle 342 is behind the parked vehicle 340. The parked vehicle 340 generates a target map that includes relative coordinates of various objects within the range of its sensors. The proximate coordinates are illustrated by circular range 348.

FIG. 3B illustrates an example of a target map generated by the parked vehicle 340. As shown, the target map includes a target position map 349 showing the relative coordinates of the objects as determined using sensor data obtained by the radar sensors. In FIG. 3B, the objects include the previously indicated first and second vehicles and some neighboring objects, which each of the object being detected as static (e.g., not moving).

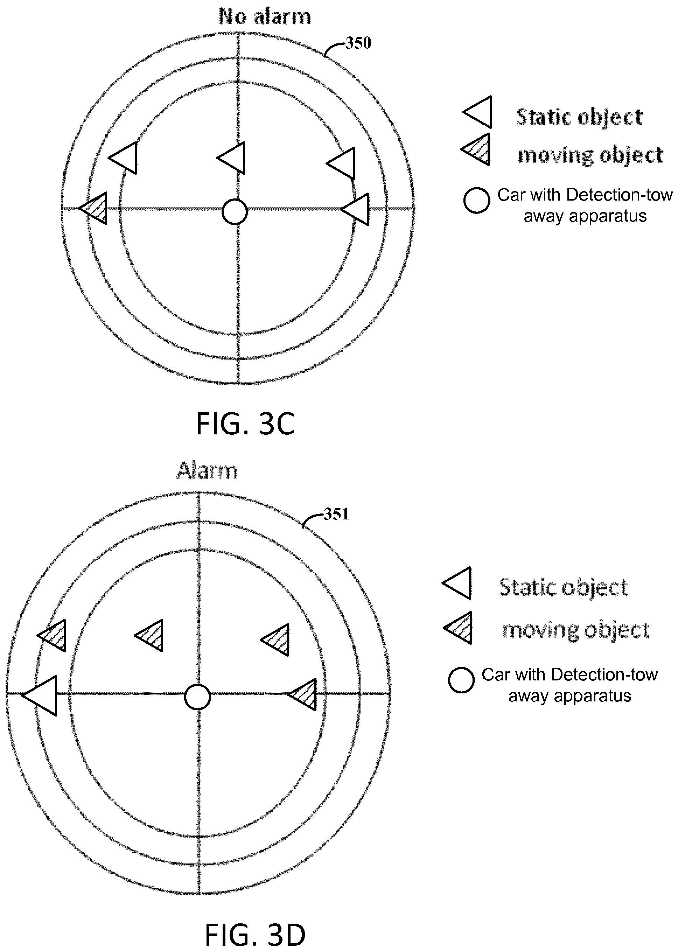

FIG. 3C illustrates another example target map generated by the parked vehicle 340. As in FIG. 3B, the target map includes a target position map 350 showing the relative coordinates of the objects as determined using sensor data obtained by radar sensors. In the specific example, the first vehicle (e.g., vehicle 344) in front is moving away, while the background and other objects are static. Using the hHME model, the processing circuitry of the apparatus can conclude from this scenario, that no tow-away event is occurring. For example, the scenario can be indicative of the situation that vehicle in front is driving away, while vehicle with radar anti-tow-away is not moving.

FIG. 3D illustrates another example target map generated by the parked vehicle 340. As in FIGs. 3B-3C, the target map includes a target position map 351 showing the relative coordinates of the objects as determined using sensor data obtained by the radar sensors. In the specific example, the first vehicle (e.g., vehicle 344) in front is static compared to the parked vehicle (e.g., vehicle 340 having the apparatus for detecting tow-away), while the background and other objects are moving. Said differently, the front object is not moving, while the background is moving. Using the hHME model, the processing circuitry of the apparatus can conclude from this scenario, that a tow-away event is occurring. For example, the scenario can be indicative of the situation that vehicle in front is towing away the parked vehicle (e.g., vehicle 340) and an alarm message is to be activated.

In order to determine whether or not the parked vehicle (e.g., vehicle 340) is being towed away, motion can be recognized in the both the target position map and a target movement map based on sensor data. As previous described, the target map is obtained by scanning the environment using all radar sensors and can be compared to the target map of the previous scan, taken, e.g., 30 seconds before. Given a target map of the current scan with targets T1 ... TN having co-ordinates T1(x1, y1), T2(x2,y2),...TN(xn,yn), and a target map of the previous scan with coordinates T1(x'1, y'1), T2(x'2,y'2),...TN(x'n,y'n), a comparison of the current and the previous target map may result in: i) no significant change in target coordinates; ii) single targets change; and iii) (nearly) all targets change by a constant offset $\Delta x$ and $\Delta y$. The latter situation can indicate that the vehicle has moved by that offset, namely $\Delta x$ and $\Delta y$. The above described methodology can include the target position map and determination movement therefrom. The target movement map can provide for movement of the objects in the particular scan, as previously described. For example, the processing circuitry detects movement, and optionally, direction of movement and/or speed, of objects using radar sensors and other calculations, such as Doppler-based calculations.

In various embodiments, a tow-away may be detected only in response to determining likely movement of the vehicle using both the target movement map and the target position map. The movement determined by the target position map can be based on the hHME model, such as various likely-scenarios as further described herein. The various likely-scenarios can include different combinations of movements of objects between target position maps, such as that described above with connection to FIGs. 3B-3D (e.g., front object moving with background static, all static, all moving, all moving but for the front object).

FIG. 4 includes an example method of detecting tow-away of a vehicle, in accordance with the present disclosure. More specifically, FIG. 4 illustrates example scenarios that may be used in an hHME model, although FIG. 4 is not intended to be limiting and is provided for illustrative purposes only. As previously described, the apparatus uses already existing/mounted radar sensors and can use a multitude of sensor to increase safety against failure and sabotage. The sensors are used to obtain a precise image of the surrounding area of the vehicle, both as a target position map and a target motion map. Each individual sensor has shortcomings as it delivers only a fragment of the overall surrounding area.

The processing circuitry of the apparatus intelligently processing the radar data using an hHME model. Here, the previously described target movement map and target position map are both taken into account and are combined. The principle of the hHME model is depicted in FIG. 4, while it needs to be noted that this can include a portion or an example the principle. In various embodiments, there are many more input scenarios (left hand side) than illustrated, and also more hidden scenarios (center of the drawing). There can be more theft scenarios, e.g. car pulled away, car loaded on a tow-away truck, car being transported on a tow-away truck, than illustrated.

As shown in the specific hHME model illustrated by FIG. 4, no alarm message is provided if both the target movement map and target position map indicate no car movement. An alarm message is provided, if both the target movement map and target position map indicate a car movement. And, the hHME model includes an inconclusive situation, if, for example, the target movement map indicates car movement and target position map indicates no car movement. In this case, the scan interval may be temporarily shortened.

In various embodiments, sabotage (not shown), can be detected if radar sensors are successively blinded, such as by applying metal spray in front of their antennas. In some instances, potential vehicle theft can include jamming or otherwise covering of radar sensors to prevent detection of the theft. As described above, embodiments can include detecting sequential covering of radar sensors, which may be within a threshold period of time, and outputting an alarm message in response to the detection. The alarm message can similarly include an acoustic message, an email message, a SMS message, among other messages, and which can be provided to the police and/or a registered contact person.

Various embodiments include the user of existing vehicle radar hardware that can be fully re-used without any modification. Within the context of the vehicle, the vehicle radar alarm system is treated as a standard alarm system, e.g., it is coupled to systems like the GPS module and/or other types of Radio Navigation System modules (to obtain the geographical position in case of an alarm message), the GSM module, LTE module or any other cellular phone standard (to send a message to the car owner, including the position, in case of a message), the alarm horn etc. A password-protected override functionality can be used to allow for intended tow-away situations.

The tow-away detection can include an on-the-fly configuration of the radar system for the use of vehicle theft detection by a combination of radar-based speed measurement using 2D Doppler, spatial averaging, temporal averaging, and taking into account both the movements during each scan, and the change of the target map from one scan to the next. Additionally, the detection can be adapted to the needs of low supply power, large sampling intervals, can include multilevel protection against jamming, sabotage, covering, and can include evaluating the characteristic signature using an hHME model. For example, the radar sensors can be triggered to wake-up by the processing circuitry, and the processing circuitry can trigger the emission of FMCW / CW pulses and reception/down-conversion/digitization of the received signal in the radar sensor. The processing circuitry can perform a calculation of the 2D Doppler FFT, perform an estimation if the car is moving / the background is changing, and take a pre-defined action in case the car is moving / the background is changing.

A method includes generating a target map indicative of objects around the vehicle using sensor data from sensor circuitry of the vehicle, the sensor circuitry including at least one radar sensor; and determining, by processing circuitry, if the vehicle is being towed away. Determining if the vehicle is being towed away can include comparing the target map to a previously obtained target map, determining if the vehicle is moving based on the comparison, and in response to determining the vehicle is moving, outputting an alarm message indicative of the vehicle being towed away.

Terms to exemplify orientation, such as upper/lower, left/right, top/bottom and above/below, may be used herein to refer to relative positions of elements as shown in the figures. It should be understood that the terminology is used for notational convenience only and that in actual use the disclosed structures may be oriented different from the orientation shown in the figures. Thus, the terms should not be construed in a limiting manner.

The skilled artisan would recognize that various terminology as used in the Specification (including claims) connote a plain meaning in the art unless otherwise indicated. As examples, the Specification describes and/or illustrates aspects useful for implementing the claimed disclosure by way of various circuits or circuitry which may be illustrated as or using terms such as blocks, modules, device, system, unit, controller, and/or other circuit-type depictions (e.g., reference numerals 104 and 106 of FIG. 1 depict a block/module as described herein). Such circuits or circuitry are used together with other elements to exemplify how certain embodiments may be carried out in the form or structures, steps, functions, operations, activities, etc. For example, in certain of the above-discussed embodiments, one or more modules are discrete logic circuits or programmable logic circuits configured and arranged for implementing these operations/activities, as may be carried out in the approaches shown in FIGs. 3A-3D. In certain embodiments, such a programmable circuit is one or more computer circuits, including memory circuitry for storing and accessing a program to be executed as a set (or sets) of instructions (and/or to be used as configuration data to define how the programmable circuit is to perform), and an algorithm or process as described at FIG. 4 is used by the programmable circuit to perform the related steps, functions, operations, activities, *etc.* Depending on the application, the instructions (and/or configuration data) can be configured for implementation in logic circuitry, with the instructions (whether characterized in the form of object code, firmware or software) stored in and accessible from a memory (circuit).

It is noted that the embodiments above have been described with reference to different subject-matters. In particular, some embodiments may have been described with reference to method-type features/aspects, whereas other embodiments may have been described with reference to an apparatus features/aspects. However, a person skilled in the art will gather from the above that, unless otherwise indicated, in addition to any combination of features/aspects belonging to one type of subject-matter, also any combination of features/aspects relating to different subject-matter, in particular a combination of features/aspects of the method-type subject-matter and features/aspects of the apparatus-type subject-matter, is considered to be disclosed with this document.

Based upon the above discussion and illustrations, those skilled in the art will readily recognize that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps. For instance, embodiments may not include implementing each of steps illustrated by FIGs. 3B-3D. As another example, embodiments can include considering additional scenarios than illustrated by FIG. 4. Such modifications do not depart from the scope of various aspects of the disclosure.

## Claims

1. A method comprising:

   generating a target map (112) indicative of a plurality of objects around a vehicle (114, 220) using sensor data from sensor circuitry (106) of the vehicle, the sensor circuitry including at least one radar sensor (224); and
   determining, by processing circuitry (104), if the vehicle is being towed away by:

   comparing the target map to a previously obtained target map;
   determining if the vehicle is moving based on the comparison; and
   in response to determining the vehicle is moving, outputting an alarm message

   indicative of the vehicle being towed away, wherein the comparing further includes comparing a first set of coordinates of the plurality of objects in the target map (112) to a second set of coordinates of the plurality of objects in the previously obtained target map and determining that the vehicle (114, 220) is moving responsive to a threshold number of the plurality of objects exhibiting a change between the first set of coordinates and the second set of coordinates.

2. The method of claim 1, further including activating the processing circuitry (104) for detecting occurrence of the tow-away in response to an indication of a vehicle alert condition.

3. The method of claim 1 or 2, wherein the output alarm message includes a message selected from the group consisting of: an acoustic message, an email, a short message service (SMS) message, Radio Navigation System coordinates, and combinations thereof.

4. The method of any preceding claim, wherein the alarm message is provided to a registered emergency contact and include Global Positioning System (GPS) coordinates.

5. The method of any preceding claim, wherein generating the target map (112) includes deriving a target position map indicative of relative positions of the plurality of objects around the vehicle (114, 220) and a target movement map indicative of movement of the plurality of objects while obtaining the sensor data.

6. The method of any preceding claim, further including obtaining the sensor data using a plurality of radar sensors (224) arranged at different locations of the vehicle (220) and configured to provide coverage for a proximity of the vehicle.

7. The method of any preceding claim, further including using a hierarchical Hidden Markov Estimation model for determining whether or not the vehicle (114, 220) is being towed away.

8. The method of any preceding claim, wherein determining if the vehicle (114, 220) is moving is in response to both the comparison of the first and second sets of coordinates and using a hierarchical Hidden Markov Estimation model to estimate movement based on a set of likely scenarios and the sensor data.

9. The method of any preceding claim, further including terminating the alarm message in response to receiving an authorized passcode.

10. The method of any preceding claim, further including periodically activating the sensor circuitry (106) for obtaining sensor data and the processing circuitry (104) generating therefrom the target maps (112) and determining whether the vehicle (114, 220) is being towed away, and periodically deactivating the sensor circuitry.

11. The method of any preceding claim, further including detecting the vehicle (114, 220) is turned off, and in response, periodically activating the sensor circuitry (106) for detecting occurrence of the tow-away.

12. The method of any preceding claim, wherein determining if the vehicle (114, 220) is moving based on the comparison further includes comparing coordinates of targets in the target map (112) and in the previously obtained target map, and

in response to below or equal to a threshold number of targets exhibiting changes in the coordinates between the target map and the previously obtained target map, determining the vehicle is not moving; and
in response to above or equal to another threshold number of targets exhibiting changes in the coordinates between the target map and the previously obtained target map, determining the vehicle is moving.

13. The method of any preceding claim, further including providing another alert message if a radar sensor (224) is covered sequentially after another radar sensor in a threshold period of time.

14. An apparatus for detecting tow-away of a vehicle (114, 220), the apparatus comprising:

sensor circuitry (106) including at least one radar sensor (224) configured and arranged to obtain sensor data indicative of a plurality of objects near the vehicle; and
processing circuitry (104) configured and arranged with the sensor circuitry to:

generate a target map (112) indicative of a position and movement of the plurality of objects around the vehicle using the sensor data; and
determine if the vehicle is being towed away by:

comparing the target map to a previously obtained target map;
determining if the vehicle is moving based on the comparison; and
in response to determining the vehicle is moving, outputting an

alarm message indicative of the vehicle being towed away,

wherein the processing circuitry is configured to compare a first set of coordinates of the plurality of objects in the target map (112) to a second set of coordinates of the plurality of objects in the previously obtained target map and determine that the vehicle (114, 220) is moving responsive to a threshold number of the plurality of objects exhibiting a change between the first set of coordinates and the second set of coordinates.

**Patentansprüche**

1. Verfahren, das Folgendes umfasst:

   Erzeugen einer Zielkarte (112), die, unter Verwendung von Sensordaten von einer Sensorschaltungsanordnung (106) des Fahrzeugs, eine Vielzahl von Objekten um das Fahrzeug (114, 220) herum angibt, wobei die Sensorschaltungsanordnung mindestens einen Radarsensor (224) beinhaltet; und
   Bestimmen, durch eine Verarbeitungsschaltungsanordnung (104), ob das Fahrzeug abgeschleppt wird, durch:

   Vergleichen der Zielkarte mit einer früher erhaltenen Zielkarte;
   Bestimmen, ob sich das Fahrzeug bewegt, basierend auf dem Vergleich; und
   als Reaktion auf Bestimmen, dass sich das

   Fahrzeug bewegt, Ausgeben einer Alarmnachricht, die angibt, dass das Fahrzeug abgeschleppt wird,
   wobei das Vergleichen ferner Vergleichen eines ersten
   Satzes von Koordinaten der Vielzahl von Objekten in der Zielkarte (112) mit einem zweiten Satz von Koordinaten der Vielzahl von Objekten in der früher erhaltenen Zielkarte beinhaltet, und
   Bestimmen, dass sich das Fahrzeug (114, 220) bewegt, als Reaktion darauf, dass eine Schwellenanzahl der Vielzahl von Objekten eine Änderung zwischen dem ersten Satz von Koordinaten und dem zweiten Satz von Koordinaten aufzeigt.

2. Verfahren nach Anspruch 1, ferner beinhaltend Aktivieren der Verarbeitungsschaltungsanordnung (104) zum Detektieren des Auftretens des Abschleppens als Reaktion auf eine Angabe einer Fahrzeugwarnbedingung.

3. Verfahren nach Anspruch 1 oder 2, wobei die ausgegebene Alarmnachricht eine Nachricht beinhaltet, die aus der Gruppe ausgewählt wird, die besteht aus: einer akustischen Nachricht, einer E-Mail, einer Short Message Service-Nachricht bzw. SMS-Nachricht, Funknavigationskoordinaten und Kombinationen davon.

4. Verfahren nach einem vorhergehenden Anspruch, wobei die Alarmnachricht an einen registrierten Notfallkontakt geliefert wird und Global Positioning System-Koordinaten bzw. GPS-Koordinaten beinhaltet.

5. Verfahren nach einem vorhergehenden Anspruch, wobei Erzeugen der Zielkarte (112) Ableiten einer Zielpositionskarte, die relative Positionen der Vielzahl von Objekten um das Fahrzeug (114, 220) herum angibt, und einer Zielbewegungskarte, die eine Bewegung der Vielzahl von Objekten angibt, während die Sensordaten erhalten werden, beinhaltet.

6. Verfahren nach einem vorhergehenden Anspruch, ferner beinhaltend Erhalten der Sensordaten unter Verwendung einer Vielzahl von Radarsensoren (224), angeordnet an verschiedenen Orten des Fahrzeugs (220) und ausgelegt zum Liefern einer Abdeckung für ein Nähe des Fahrzeugs.

7. Verfahren nach einem vorhergehenden Anspruch, ferner beinhaltend Verwenden eines hierarchischen verdeckten Markov-Schätzung-Modells zum Bestimmen, ob das Fahrzeug (114, 220) abgeschleppt wird.

8. Verfahren nach einem vorhergehenden Anspruch, wobei Bestimmen, ob sich das Fahrzeug (114, 220) bewegt, als Reaktion auf sowohl den Vergleich des ersten und des zweiten Satzes von Koordinaten als auch Verwenden eines hierarchischen verdeckten Markov-Schätzung-Modells zum Schätzen einer Bewegung, basierend auf einem Satz von wahrscheinlichen Szenarien und den Sensordaten, geschieht.

9. Verfahren nach einem vorhergehenden Anspruch, ferner beinhaltend Beenden der Alarmnachricht als Reaktion auf Empfangen eines autorisierten Passcodes.

10. Verfahren nach einem vorhergehenden Anspruch, ferner beinhaltend periodisches Aktivieren der Sensorschaltungsanordnung (106) zum Erhalten von Sensordaten und der Verarbeitungsschaltungsanordnung (104) zum Erzeugen der Zielkarten (112) davon, und Bestimmen, ob das Fahrzeug (114, 220) abgeschleppt wird, und periodisches Deaktivieren der Sensorschaltungsanordnung.

11. Verfahren nach einem vorhergehenden Anspruch, ferner beinhaltend Detektieren, dass das Fahrzeug (114, 220) ausgeschaltet ist, und, als Reaktion, periodisches Aktivieren der Sensorschaltungsanordnung (106) zum Detektieren von Auftreten des Abschleppens.

12. Verfahren nach einem vorhergehenden Anspruch, wobei Bestimmen, ob sich das Fahrzeug (114, 220) bewegt, basierend auf dem Vergleich, ferner Vergleichen von Koordinaten von Zielen in der Zielkarte (112) und in der früher erhaltenen Zielkarte beinhaltet, und

   als Reaktion auf kleiner oder gleich einer Schwellenanzahl von Zielen, die Änderungen der Koordinaten zwischen der Zielkarte und der früher erhaltenen Zielkarte aufzeigen, Bestimmen, dass sich das Fahrzeug nicht bewegt; und als Reaktion auf größer oder gleich einer anderen Schwellenanzahl von Zielen, die Änderungen der Koordinaten zwischen der Zielkarte und der früher erhaltenen Zielkarte aufzeigen, Bestimmen, dass sich das Fahrzeug bewegt.

13. Verfahren nach einem vorhergehenden Anspruch, ferner beinhaltend Liefern einer weiteren Warnnachricht, falls ein Radarsensor (224) abgedeckt ist, sequenziell nach einem weiteren Radarsensor in einem Schwellenzeitraum.

14. Einrichtung zum Detektieren von Abschleppen eines Fahrzeugs (114, 220), wobei die Einrichtung Folgendes umfasst:

eine Sensorschaltungsanordnung (106), beinhaltend mindestens einen Radarsensor (224), ausgelegt und angeordnet zum Erhalten von Sensordaten, die eine Vielzahl von Objekten nahe dem Fahrzeug angeben; und eine Verarbeitungsschaltungsanordnung (104), ausgelegt und angeordnet, mit der Sensorschaltungsanordnung, zum:

Erzeugen einer Zielkarte (112), die unter Verwendung der Sensordaten eine Position und Bewegung der Vielzahl von Objekten um das Fahrzeug herum angibt; und Bestimmen, ob das Fahrzeug abgeschleppt wird, durch:

Vergleichen der Zielkarte mit einer früher erhaltenen Zielkarte; Bestimmen, ob sich das Fahrzeug bewegt, basierend auf dem Vergleich; und als Reaktion auf Bestimmen, dass

sich das Fahrzeug bewegt, Ausgeben einer Alarmnachricht, die angibt, dass das Fahrzeug abgeschleppt wird,

wobei die Verarbeitungsschaltungsanordnung ausgelegt ist zum Vergleichen eines ersten Satzes von Koordinaten der Vielzahl von Objekten in der Zielkarte (112) mit einem zweiten Satz von Koordinaten der Vielzahl von Objekten in der früher erhaltenen Zielkarte, und Bestimmen, dass sich das Fahrzeug (114, 220) bewegt, als Reaktion darauf, dass eine Schwellenanzahl der Vielzahl von Objekten eine Änderung zwischen dem ersten Satz von Koordinaten und dem zweiten Satz von Koordinaten aufzeigt.

## Revendications

1. Procédé comprenant :

la génération d'une carte de cibles (112) indiquant une pluralité d'objets autour d'un véhicule (114, 220) à l'aide de données de capteurs provenant de circuits de capteurs (106) du véhicule, les circuits de capteurs comprenant au moins un capteur radar (224) ; et la détermination, par des circuits de traitement (104), que le véhicule est ou non remorqué par :

comparaison de la carte de cibles à une carte de cibles obtenue précédemment ; détermination que le véhicule se déplace ou non en fonction de la comparaison ; et en réponse à la détermination que le véhicule se déplace, délivrance d'un message d'alarme indiquant que le véhicule est remorqué,

dans lequel la comparaison comporte en outre la comparaison d'un premier ensemble de coordonnées de la pluralité d'objets dans la carte de cibles (112) à un second ensemble de coordonnées de la pluralité d'objets dans la carte de cibles obtenue précédemment et la détermination que le véhicule (114, 220) se déplace quand un nombre seuil de la pluralité d'objets présente un changement entre le premier ensemble de coordonnées et le second ensemble de coordonnées.

2. Procédé selon la revendication 1, comprenant en outre l'activation des circuits de traitement (104) pour détecter une occurrence du remorquage en réponse à une indication d'un état d'alerte de véhicule.

3. Procédé selon la revendication 1 ou 2, dans lequel le message d'alarme délivré comporte un message sélectionné dans le groupe comptant : un message acoustique, un courrier électronique, un message de service de messages courts (SMS), des coordonnées de système de radionavigation et des combinaisons de ceuxci .

4. Procédé selon n'importe quelle revendication précédente, dans lequel le message d'alarme est fourni à un contact d'urgence enregistré et comporte des coordonnées de système de positionnement global (GPS).

5. Procédé selon n'importe quelle revendication précédente, dans lequel la génération de la carte de cibles (112) comporte la dérivation d'une carte de positions de cibles indicative de positions relatives de la pluralité d'objets autour du véhicule (114, 220) et d'une carte de déplacement de cibles indicative d'un déplacement de la pluralité d'objets durant l'obtention des données de capteurs.

6. Procédé selon n'importe quelle revendication précédente comportant l'obtention des données de capteur à l'aide d'une pluralité de capteurs radar (224) disposés à différents endroits du véhicule (220) et configurés pour assurer une couverture d'une proximité du véhicule.

7. Procédé selon n'importe quelle revendication précédente comportant l'utilisation d'un modèle hiérarchique d'estimation de Markov caché pour déterminer que le véhicule est ou non remorqué (114, 220).

8. Procédé selon n'importe quelle revendication précédente, dans lequel la détermination que le véhicule (114, 220) se déplace ou non est réalisée en réponse à la fois à la comparaison des premier et second ensembles de coordonnées et à l'utilisation d'un modèle hiérarchique d'estimation de Markov caché pour estimer un déplacement en fonction d'un ensemble de scénarios probables et des données de capteurs.

9. Procédé selon n'importe quelle revendication précédente comportant la cessation du message d'alarme en réponse à la réception d'un code d'accès autorisé.

10. Procédé selon n'importe quelle revendication précédente comportant en outre l'activation périodique des circuits de capteurs (106) pour obtenir des données de capteurs et la génération à partir de celles-ci par les circuits de traitement (104) des cartes de cibles (112) et la détermination que le véhicule (114, 220) est ou non remorqué, et la désactivation périodique des circuits de capteurs.

11. Procédé selon n'importe quelle revendication précédente comportant la détection que le véhicule (114, 220) est désactivé et, en réponse, l'activation périodique des circuits de capteurs (106) pour détecter une occurrence du remorquage.

12. Procédé selon n'importe quelle revendication précédente, dans lequel la détermination que le véhicule (114, 220) se déplace ou non en fonction de la comparaison comporte en outre la comparaison de coordonnées de cibles dans la carte de cibles (112) et dans la carte de cibles obtenue précédemment, et

quand un nombre inférieur ou égal à un seuil de cibles présente des changements de coordonnées entre la carte de cibles et la carte de cibles obtenue précédemment, la détermination que le véhicule ne se déplace pas ; et

quand un nombre supérieur ou égal à un autre seuil de cibles présente des changements de coordonnées entre la carte de cibles et la carte de cibles obtenue précédemment, la détermination que le véhicule se déplace.

13. Procédé selon n'importe quelle revendication précédente comportant la fourniture d'un autre message d'alerte si un capteur radar (224) est couvert séquentiellement après un autre capteur radar dans un laps de temps seuil.

14. Appareil de détection d'un remorquage d'un véhicule (114, 220), l'appareil comprenant :

des circuits de capteurs (106) comportant au moins un capteur radar (224), configurés et disposés de manière à obtenir des données de capteurs indiquant une pluralité d'objets à proximité du véhicule, et
des circuits de traitement (104) configurés et disposés avec les circuits de capteurs pour

générer une carte de cibles (112) indiquant la position et le déplacement de la pluralité d'objets autour du véhicule à l'aide des données de capteurs ; et
déterminer que le véhicule est ou non remorqué par :

comparaison de la carte de cibles à une carte de cibles obtenue précédemment ;
détermination que le véhicule se déplace ou non en fonction de la comparaison ; et
en réponse à la détermination que le véhicule se déplace, délivrance d'un message d'alarme indiquant que le véhicule est remorqué,

dans lequel les circuits de traitement sont configurés pour comparer un premier ensemble de coordonnées de la pluralité d'objets dans la carte de cibles (112) à un second ensemble de coordonnées de la pluralité d'objets dans la carte de cibles obtenue précédemment et déterminer que le véhicule (114 220) se déplace quand un nombre seuil de la pluralité d'objets présente un changement entre le premier ensemble de coordonnées et le second ensemble de coordonnées.

FIG. 1

EP 3 599 482 B1

FIG. 2

FIG. 3A

FIG. 3B

No alarm

350

Static object

moving object

◯ Car with Detection-tow away apparatus

## FIG. 3C

Alarm

351

Static object

moving object

◯ Car with Detection-tow away apparatus

## FIG. 3D

FIG. 4

Alarm

Inconclusive, increase scan rate

Parked Car in front leaving position

Rear parked car leaving position

Car from front passing by

Car from rear passing by

Both conditions

Only one condition

Car moving

Car moving

**Target position map**

Front objects not moving

Front object moving away

Front object approaching

Rear objects not moving

Rear object moving away

Rear object approaching

**Target movement map**

(nearly) all Targets changing by $\Delta x$ and $\Delta y$

**EP 3 599 482 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5929753 A
- US 2001035837 A1
- US 2016288770 A1
- EP 3012659 A2